# DEMANDE DE BREVET EUROPEEN

(11) **EP 1 318 487 A1**
(43) Date de publication de la demande: **11.06.2003**
(21) Numéro de dépôt: 01811199.7
(22) Date de dépôt: 10.12.2001
(51) Int. Cl.: G07F 7/00, G06K 13/08

(54) **Dispositif de securité pour lecteur de cartes**

(71) Demandeur: ER System SA, 2525 Le Landeron (CH)
(72) Inventeur: Flückiger, Yves, 2503 Bienne (CH); Rusca, Eric, 2525 Le Landeron (CH); Debrot, Pierre, 2525 Le Landeron (CH)
(74) Mandataire: Gresset, Jean

(57) **Abrégé**

L'invention concerne un dispositif de sécurité pour un lecteur de cartes (16) utilisé par un automate chargé d'effectuer une opération. Il utilise un tube d'obturation (20) muni de deux fenêtres axiales de largeurs différentes, l'une d'entrée (36), l'autre de sortie (38), opposées non diamétralement. Ce tube peut être placé soit dans une position de fermeture pour laquelle la fenêtre d'entrée (36) interdit l'accès à tout objet n'ayant pas la dimension d'une carte normalisée, soit dans une position de semi-ouverture pour laquelle la fenêtre d'entrée (36) permet l'introduction dans le tube d'une carte à dimension normalisée, soit dans une position de pleine ouverture pour laquelle la fenêtre de sortie (38) autorise l'envoi au lecteur (16) d'une carte (14) normalisée dotée d'une piste magnétique et/ou d'une puce électronique.

## Description

La présente invention se rapporte aux automates utilisant un lecteur de cartes pour effectuer des transactions ou opérations diverses, telles que la distribution de billets de banque, la fourniture de boissons ou l'enclenchement d'une pompe à essence.

L'invention concerne, plus particulièrement, un dispositif de sécurité pour le lecteur de cartes d'un tel automate.

On comprend aisément la nécessité de protéger au mieux le lecteur contre toute intervention ou perturbation à intention frauduleuse et tout acte de vandalisme, tels que l'introduction d'une fausse carte, d'une lame ou de tout autre objet fin.

Le document EP 0 780 814, par exemple, décrit un système de sécurité comportant un tube rotatif percé d'une fente axiale pour l'introduction de la carte et, à l'intérieur de ce tube, un cylindre fixe percé d'une fente diamétrale recevant la carte en entier. Lorsque la présence de la carte dans le cylindre est détectée, le tube tourne de 180° de manière à amener sa fente en regard de celle du cylindre et laisser passer la carte vers le lecteur. Un tel système présente l'inconvénient d'occuper une place importante entre le panneau d'entrée et le lecteur puisque le cylindre doit emprisonner la carte (dont la longueur est de 85 mm). Or, l'espace généralement disponible à cet endroit dans les automates existants n'est que de 30 mm environ. De plus, le système est incapable de s'opposer à l'introduction dans le cylindre d'un objet plat moins large qu'une carte.

La présente invention a pour but de fournir un système de sécurité occupant un faible espace entre le panneau d'entrée et le lecteur de cartes et interdisant l'introduction de tout objet autre qu'une carte. Les tentatives de fraude et de vandalisme sont donc inévitablement vouées à l'échec.

De façon plus précise, l'invention concerne un dispositif de sécurité pour un lecteur de cartes utilisé par un automate, qui comporte:
- un contrôleur d'entrée muni d'une fente d'épaisseur et de longueur adaptées pour juste permettre le passage d'une carte et comprenant des premiers moyens de contrôle pour vérifier que l'objet introduit a la dimension d'une carte normale,
- un tube d'obturation, d'axe parallèle à ladite fente, disposé entre le contrôleur et le lecteur, muni de deux fenêtres axiales, l'une d'entrée, l'autre de sortie, opposées non diamétralement, et comprenant des deuxièmes moyens de contrôle pour vérifier que l'objet introduit possède une piste magnétique et/ou une puce électronique,
- un système d'entraînement du tube en rotation, et
- des moyens électroniques de commande du système d'entraînement, répondant aux moyens de contrôle pour placer le tube soit dans une position de fermeture pour laquelle la fenêtre d'entrée n'est pas en regard de la fente du contrôleur, soit dans une position de semi-ouverture pour laquelle seule la fenêtre d'entrée est en regard de la fente du contrôleur, soit dans une position d'ouverture pour laquelle les deux fenêtres sont en regard de la fente du contrôleur, lesdites positions étant prises selon la logique suivante:
   . passage de la position de fermeture à la position de semi-ouverture si les premiers moyens de contrôle ont détecté l'introduction d'un objet dont la dimension est celle d'une carte normale, et
   . passage de la position de semi-ouverture à la position d'ouverture si les deuxièmes moyens de contrôle ont détecté que l'objet placé dans le tube possède une piste magnétique et/ou une puce électronique.

De façon avantageuse, les moyens de commande répondent, en plus, au lecteur et à l'automate selon la logique suivante:
. passage de la position d'ouverture à la position de fermeture lorsque la carte se trouve dans le lecteur, et
. passage de la position de fermeture à la position d'ouverture lorsque l'opération effectuée par l'automate est terminée.

Il est également avantageux que les moyens de commande répondent, en plus, aux premiers moyens de contrôle pour ramener le tube à la position de fermeture si ces moyens ont détecté le retrait de l'objet introduit.

De préférence, le dispositif selon l'invention comporte encore les caractéristiques suivantes:
- les premiers moyens de contrôle comportent, aux deux extrémités de la fente, d'un côté, deux sources de lumière et, de l'autre côté, deux photodétecteurs faisant respectivement face aux deux sources et reliés aux moyens de commande;
- les fenêtres du tube sont disposées à environ 165° l'une de l'autre, la fenêtre d'entrée ayant un angle d'ouverture d'environ 50° et la fenêtre de sortie un angle d'ouverture d'environ 30°;
- le passage de la position de fermeture à la position de semi-ouverture correspond à une rotation du tube d'environ 30° et le passage de la position de semi-ouverture à la position d'ouverture à une rotation d'environ 30° également;
- les moyens de commande comportent un microprocesseur et des capteurs, avantageusement photoélectriques, pour fournir à celui-ci des indications relatives à la position angulaire du tube;
- le tube a un diamètre notablement inférieur à la longueur d'une carte, avantageusement de 25 mm environ.

L'invention sera mieux comprise à la lecture de la description qui va suivre, faite en regard du dessin annexé dans lequel:
- la figure 1 est une vue latérale simplifiée du dispositif selon l'invention au moment de la présentation d'une carte à son entrée;
- la figure 2 montre la face interne du contrôleur de largeur de carte, vue du tube d'obturation; et
- les figures 3 à 8 illustrent les différentes position qui peuvent être prises par le tube.

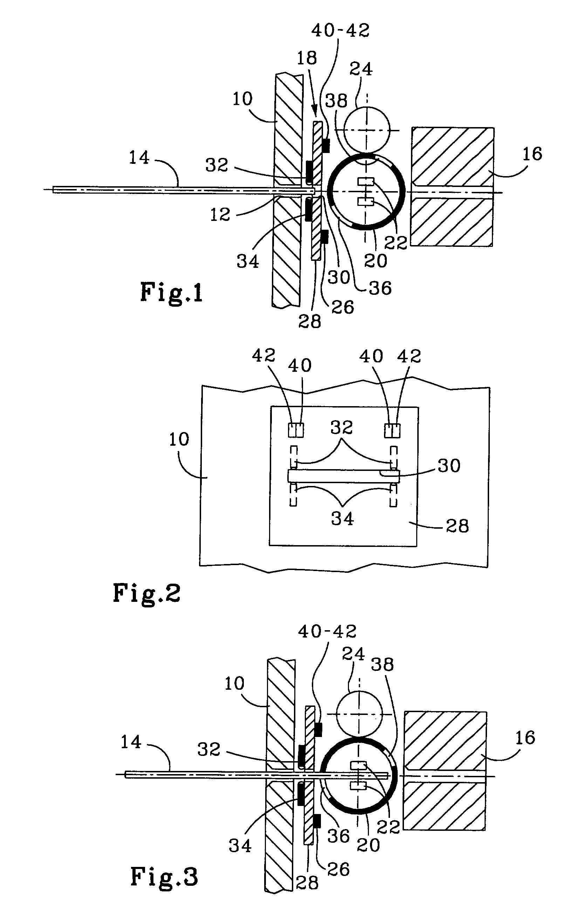

La figure 1 représente, en 10, le panneau avant d'un automate (non représenté), qui est muni d'une fente horizontale 12 permettant l'introduction d'une carte en plastique 14, du type carte de crédit ISO courante, destinée à être reçue par un lecteur motorisé 16, de tout type disponible sur le marché, utilisé par l'automate.

Le dispositif selon l'invention comporte essentiellement un contrôleur de largeur de carte 18, un tube d'obturation cylindrique 20, un détecteur de présence de piste magnétique ou de puce électronique 22, un système 24 d'entraînement en rotation du cylindre 20 et un circuit de commande 26.

Le contrôleur 18, qui se trouve juste derrière le panneau 10, comporte une plaque 28 munie d'une fente horizontale 30 coplanaire à la fente 12 et dont la longueur correspond à la largeur d'une carte normalisée (54 mm). Il a pour fonction de contrôler que la carte introduite 14 n'a pas une largeur inférieure à celle d'une carte normale. A cet effet, comme le montre la figure 2, la face externe de la plaque 28 porte, aux deux extrémités de la fente 30, d'un côté, deux sources de lumière 32, par exemple des diodes électroluminescentes (LED), et, de l'autre côté, deux photodétecteurs 34, par exemple des photodiodes, faisant respectivement face aux deux sources 32 et reliés au circuit de commande 26.

Le tube d'obturation 20 est disposé à quelques millimètres de la plaque 28 du contrôleur 18, son axe étant parallèle et coplanaire aux fentes 12 et 30. Il est avantageusement réalisé en acier inox et a un diamètre d'environ 25 mm, donc nettement inférieur à la longueur d'une carte normalisée (85 mm). Ce tube présente la particularité de posséder deux fenêtres axiales 36 et 38 de longueur correspondant à la largeur d'une carte normalisée. La fenêtre 36, dite fenêtre d'entrée, est disposée du côté du contrôleur 18, tandis que la fenêtre 38, dite fenêtre de sortie, est opposée à la fenêtre d'entrée 36, mais non diamétralement, de manière à former avec elle un angle d'environ 165°.

De plus, la fenêtre d'entrée 36 est plus large que la fenêtre de sortie 38. Typiquement, elles ont des angles d'ouverture respectifs de 50° et 30° environ.

Le détecteur 22 est placé à l'intérieur du tube 20 et relié au circuit de commande 26. Il peut être constitué par tout moyen permettant de détecter la présence d'un objet magnétique proche ou d'une puce électronique.

Le système d'entraînement 24, relié au circuit de commande 26, utilise avantageusement un moteur a courant continu dont le rotor est couplé, par exemple par une courroie, à l'une des extrémités du tube 20.

Enfin, le circuit de commande 26, qui comporte un microprocesseur, est disposé sur la face interne de la plaque 28.

On notera, en se référant à la figure 2, que la plaque 28 porte également, sur sa face interne, deux capteurs formés chacun d'une source de lumière 40, par exemple une diode électroluminescente (LED), et d'un photodétecteur 42, par exemple une photodiode. Ces capteurs sont respectivement dirigés vers les deux extrémités du tube 20 qui sont dotées de moyens (non représentés) pour que la lumière émise par les sources 40 soit renvoyée ou non en direction des photodétecteurs 42, selon la position du tube. Il peut s'agir, par exemple, de fentes de longueurs différentes pratiquées dans la paroi du cylindre. Ainsi qu'il apparaîtra plus loin, ces deux capteurs servent à fournir au circuit de commande 26 des indications relatives à la position angulaire du tube 20 et forment avec lui les moyens de commande du dispositif.

Les fonctions du circuit 26 vont être maintenant décrites, en même temps que le fonctionnement du dispositif selon l'invention, en se référant aux figures 1 et 3 à 8.

Comme le montre la figure 1, lorsqu'une carte 14 est présentée dans la fente 12, le tube 20 occupe une position, appelée position 0 ou position de fermeture, interdisant son introduction car sa fenêtre d'entrée 36 est orientée, vers le bas, à environ 35° du plan de référence.

Les deux photodétecteurs 34 du contrôleur 18 permettent alors de vérifier que l'objet présenté a la largeur d'une carte normalisée. Tous les deux doivent donc envoyer au circuit 26 un signal indiquant que la lumière émise par les sources 32 ne les atteint pas. Si les deux détecteurs 34 reçoivent toujours de la lumière, notamment parce qu'on tente d'introduire une pièce de monnaie ou tout autre objet (lame, tournevis,...) destiné à endommager le système, le circuit 26 ne réagit pas et le tube 20 reste immobile.

Mais si l'objet présenté a la bonne largeur, les deux détecteurs 34 ne reçoivent plus de lumière. Si l'automate a autorisé l'acceptation d'une carte, le circuit 26 donne donc l'ordre au moteur du système d'entraînement 24 de faire tourner le tube 20 dans le sens des aiguilles d'une montre (ci-après, AM) jusqu'à ce que les signaux fournis par les détecteurs 42 indiquent que la rotation s'est faite sur un angle d'environ 30°. Le tube 20 est stoppé à cette position, appelée position 1 ou position de semi-ouverture, de manière à ce que, comme représenté sur la figure 3, la carte 12 puisse franchir la fenêtre d'entrée 36 mais vienne en butée contre la paroi interne du tube.

Dans la position 1, le détecteur 22 vérifie que la carte introduite est dotée d'une piste magnétique et/ou d'une puce électronique. Si ce n'est pas le cas, le circuit 26 ne réagit pas et le tube 20 reste immobile. La carte 12 n'ira pas plus loin et doit donc être retirée.

Dès que le circuit 26 a détecté le retrait de la carte, c'est-à-dire que les photodétecteurs 34 reçoivent, de nouveau, la lumière provenant des sources 32, il donne l'ordre au moteur du système d'entraînement 24 de faire tourner le cylindre 20 dans le sens inverse des aiguilles d'une montre (ci-après, IAM) jusqu'à ce que les signaux fournis par les détecteurs 42 indiquent que la rotation s'est faite sur un angle d'environ 30° et donc que le tube a regagné sa position 0. Le système est prêt, alors, à recevoir une nouvelle carte.

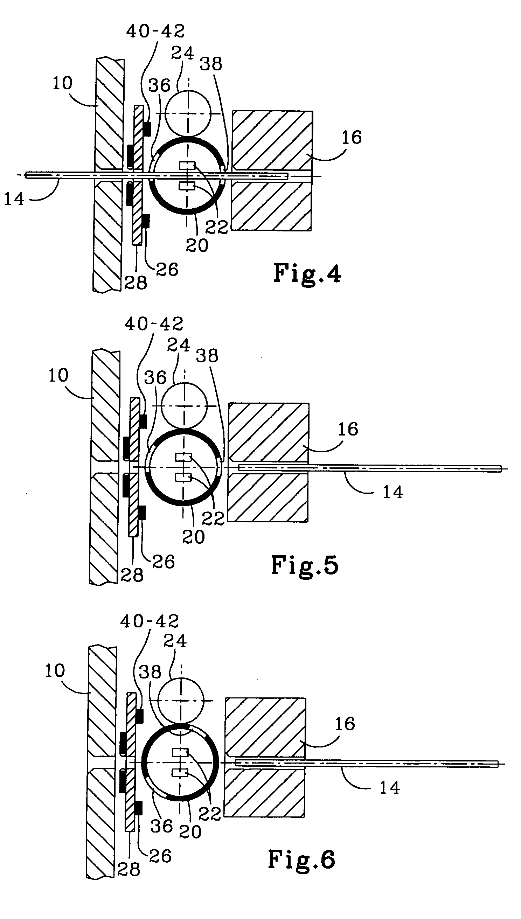

Si la présence d'une piste magnétique et/ou d'une puce sur la carte 12 a été remarquée par le détecteur 22, le circuit 26, renseigné par les détecteurs de position 42, fait tourner, à nouveau, le tube 20 dans le sens AM d'un angle d'environ 30° pour l'amener en position 2, appelée position d'ouverture, de manière à ce que, comme représenté sur la figure 4, la carte 12 puisse franchir la fenêtre de sortie 38 et pénétrer dans le lecteur 16.

Dans la position 2, le moteur du lecteur 16 prend la carte en charge et l'amène à sa position de traitement, illustrée à la figure 5. Dès que le circuit 26 détecte que la carte 12 se trouve en bonne position dans le lecteur, il fait ramener, avec l'aide des détecteurs 42, le tube 20 à la position 0, représentée à la figure 6, par une rotation de 60° environ dans le sens IAM.

Le circuit 26 vérifie, alors, à partir des signaux fournis par les capteurs 42, que le tube 20 est bien complètement fermé, c'est-à-dire en position 0, de manière à faire échouer toute tentative de fraude ou de vandalisme, par exemple en utilisant du scotch ou un prolongateur de carte,...

Si une anomalie est détectée dans la position du tube 20, le circuit 26, aidé par les détecteurs 42, le fait ramener en position 2 puis donne l'ordre au lecteur 16 d'arrêter la transaction en cours et de renvoyer la carte. Lorsque les détecteurs 34 signalent que la carte a été retirée, le tube est ramené à sa position 0. Le système est prêt, alors, à recevoir une nouvelle carte.

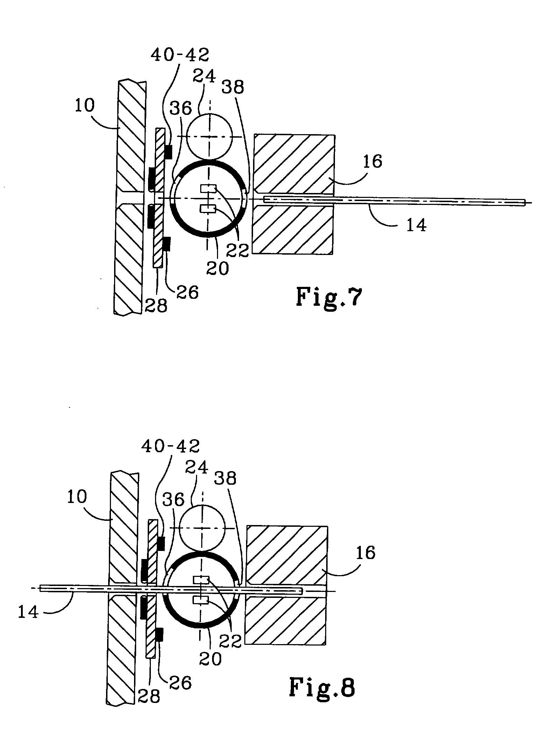

Si aucune anomalie n'est détectée, le circuit 26 donne l'ordre au lecteur 16 de démarrer la transaction et le tube 20 reste à la position 0 jusqu'à ce que l'automate avertisse le lecteur 16 et le circuit 26 que la transaction est terminée. A ce moment, comme illustré par la figure 7, le circuit 26, aidé par les détecteurs 42, ramène le tube 20 en position 2 par une rotation AM d'environ 60°, puis ordonne au lecteur 16 d'expulser la carte afin que l'utilisateur puisse la récupérer, ainsi que montré sur la figure 8.

Dès que le circuit 26 a détecté le retrait de la carte, c'est-à-dire que les photodétecteurs 34 reçoivent, de nouveau, la lumière provenant des sources 32, il donne l'ordre au moteur du système d'entraînement 24 de faire tourner le tube 20 dans le sens IAM jusqu'à ce que les signaux fournis par les détecteurs 42 indiquent que la rotation s'est faite sur un angle d'environ 60° et donc que le tube a regagné sa position 0. Le système est prêt, alors, à recevoir une nouvelle carte.

Ainsi est réalisé un dispositif de sécurité qui occupe, entre le panneau d'entrée 10 et le lecteur de cartes 16, un espace inférieur à 30 mm, compatible avec l'espace généralement disponible à cet endroit dans les automates existants. Le dispositif présente, en plus, par rapport aux réalisations de l'art antérieur, l'avantage d'être, lui même, protégé contre l'introduction de tout objet destiné à le bloquer ou l'endommager. Les tentatives de fraude et de vandalisme ne peuvent donc qu'échouer.

## Revendications

1. Dispositif de sécurité pour un lecteur de cartes (16) utilisé par un automate chargé d'effectuer une opération, **caractérisé en ce qu'**il comporte:
- un contrôleur d'entrée (18) muni d'une fente (30) d'épaisseur et de longueur adaptées pour juste permettre le passage d'une carte (14) et comprenant des premiers moyens de contrôle (32, 34) pour vérifier que l'objet introduit a la dimension d'une carte normale,
- un tube d'obturation (20), d'axe parallèle à ladite fente, disposé entre ledit contrôleur (18) et ledit lecteur (16), muni de deux fenêtres axiales, l'une d'entrée (36), l'autre de sortie (38), opposées non diamétralement, et comprenant des deuxièmes moyens de contrôle (22) pour vérifier que l'objet introduit possède une piste magnétique et/ou une puce électronique,
- un système d'entraînement (24) du tube en rotation, et
- des moyens électroniques de commande (26, 40, 42) dudit système d'entraînement, répondant auxdits moyens de contrôle (22, 32, 34) pour placer le tube (20) soit dans une position de fermeture pour laquelle la fenêtre d'entrée (36) n'est pas en regard de la fente (30) du contrôleur, soit dans une position de semi-ouverture pour laquelle seule la fenêtre d'entrée (36) est en regard de la fente (30) du contrôleur, soit dans une position de pleine ouverture pour laquelle les deux fenêtres (36, 38) sont regard de la fente (30) du contrôleur, lesdites positions étant prises selon la logique suivante:
. passage de la position de fermeture à la position de semi-ouverture si les premiers moyens de contrôle (32, 34) ont détecté l'introduction d'un objet dont la dimension est celle d'une carte normale, et
. passage de la position de semi-ouverture à la position d'ouverture si les deuxièmes moyens de contrôle (22) ont détecté que l'objet placé dans le tube possède une piste magnétique et/ou une puce électronique.

2. Dispositif selon la revendication 1, **caractérisé en ce que** lesdits moyens de commande (26, 40, 42) répondent, en plus, au lecteur (16) et à l'automate selon la logique suivante:
. passage de la position d'ouverture à la position de fermeture lorsque la carte se trouve dans le lecteur (16), et
. passage de la position de fermeture à la position d'ouverture lorsque l'opération effectuée par l'automate est terminée.

3. Dispositif selon l'une des revendications 1 et 2, **caractérisé en ce que** lesdits moyens de commande répondent, en plus, aux premiers moyens de contrôle (32, 34) pour ramener le tube (20) à la position de fermeture si ces moyens ont détecté le retrait de l'objet introduit.

4. Dispositif selon la revendication 1, **caractérisé en ce que** les premiers moyens de contrôle comportent, aux deux extrémités de ladite fente (30), d'un côté, deux sources de lumière (32) et, de l'autre côté, deux photodétecteurs (34) faisant respectivement face aux deux sources et reliés aux moyens de commande.

5. Dispositif selon la revendication 1, **caractérisé en ce que** les fenêtres du tube (20) sont disposées à environ 165° l'une de l'autre, la fenêtre d'entrée (36) ayant un angle d'ouverture d'environ 50° et la fenêtre de sortie (38) un angle d'ouverture d'environ 30°.

6. Dispositif selon la revendication 5, **caractérisé en ce que** le passage de la position de fermeture à la position de semi-ouverture correspond à une rotation du tube (20) d'environ 30° et le passage de la position de semi-ouverture à la position d'ouverture à une rotation d'environ 30° également.

7. Dispositif selon la revendication 1, **caractérisé en ce que** lesdits moyens de commande comportent un microprocesseur et des capteurs (40, 42) pour fournir à celui-ci des indications relatives à la position angulaire du tube (20).

8. Dispositif selon la revendication 7, **caractérisé en ce que** lesdits capteurs sont photoélectriques.

9. Dispositif selon la revendication 1, **caractérisé en ce que** le tube (20) a un diamètre notablement inférieur à la longueur d'une carte.

10. Dispositif selon la revendication 9, **caractérisé en ce que** le diamètre du tube (20) est d'environ 25 mm.
